# EUROPEAN PATENT APPLICATION

(11) **EP 0 534 594 A1**
(43) Date of publication of application: **31.03.1993**
(21) Application number: 92306846.4
(22) Date of filing: 27.07.1992
(51) Int. Cl.: G02F 1/1341

(54) **Liquid crystal cell and method of producing liquid crystal cell**

(30) Priority: 21.09.1991 JP 270293/91
(71) Applicant: ROHM CO., LTD., Kyoto-shi Kyoto 615 (JP)
(72) Inventor: Yanagi, Masahiro, Osada-haitsu 405, Minami-ku, Kyoto-shi, Kyoto 601 (JP)
(74) Representative: Allman, Peter John

(57) **Abstract**

A liquid crystal cell and a method thereof are disclosed, wherein the liquid crystal cell comprising an anti-ascent piece (5) installed in the vicinity of the outer edge of a filling port (4) for liquid crystal; and the method thereof comprising a step to install anti-ascent pieces in the vicinity of the outer edge of a filling port for liquid crystal.

## Description

### BACKGROUND OF THE INVENTION

The present invention relates to a liquid crystal cell and methods of producing liquid crystal cells and, more particularly, to a liquid crystal cell characterized by an anti-ascent piece for the liquid crystal installed in the vicinity of the outer edge of a fill port for liquid crystal and a method of producing such a liquid crystal cell.

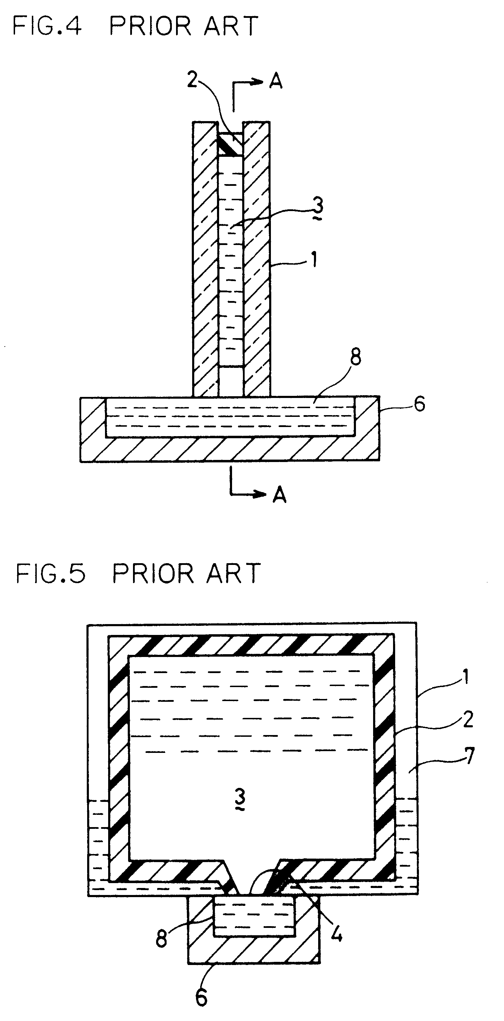

Conventionally, in order to fill liquid crystal 8 into a liquid crystal cell, as shown in Fig. 4 and Fig. 5, the liquid crystal cell is put on a boat 6 filled with liquid crystal 8 with a filling port 4 for the liquid crystal directed at the boat 6, and vacuum technology is applied to fill the liquid crystal 8 into the cell (a space 3 for filling liquid crystal 8).

As shown in Fig. 5, capillary phenomenon causes some part of the liquid crystal 8 to ascend the outer edge space 7 which is formed by the sealing material 2 and glass substrate 1, 1. For this reason , cleaning is needed after filling liquid crystal 8 in order to remove the residue of the liquid crystal 8 from the space. Further, if cleaning is insufficient and the liquid crystal 8 remains on the terminal, it would cause disconnection of terminal, and reduce the reliablility of the liquid crystal display device.

It is an object of the present invention to solve the above-mentioned problems of the prior art and to provide a liquid crystal cell and a method of producing a liquid crystal cell which can prevent the ascending of the liquid crystal into the outer edge space due to the capillary phenomenon.

### SUMMARY OF THE INVENTION

The present invention provides a liquid crystal cell comprising a Pair of transparent substrates, sealing material inserted between the pair of substrates, and liquid crystal filled in a space surrounded by the pair of substrates and the sealing material; characterized by an anti-ascent piece for the liquid crystal installed in the vicinity of the outer edge of a filling port for liquid crystal on the sealing material.

With regard to the liquid crystall cell of the present invention, it is desirable that ultraviolet-cured cement should be used for the above-mentioned anti-ascent piece.

Further, with regard to the liquid crystal cell of the present invention, it is desirable that a stopper for the anti-ascent piece is installed on the sealing material.

Also, the present invention provides a method for producing a liquid crystal cell comprising a pair of transparent substrates, sealing material inserted between the pair of substrates, and liquid crystal filled in a space surrounded by the pair of substrates and the sealing material; characterized by a step of installation of an anti-ascent piece for the liquid crystal in the vicinity of the outer edge of a filling port for liquid crystal on the sealing material

With regard to the method for producing a liquid crystal cell of the present invention, if hardening fluid resin is to be used for the anti-ascent piece, it is desirable that a step for hardening the above-mentioned anti-ascent piece is incorporated after the step for installing the anti-ascent piece.

In the liquid crystal cell of the present invention, since the anti-ascent piece is installed in the vicinity of the outer edge of the fill port for liquid crystal in onder to prevent the ascending of the liquid crystal into the outer edge space due to the capillary phenomenon, the liquid crystal will not ascent into the outer edge space. Also, with the method for producing a liquid crystal cell of the present invention, liquid can be filled into the liquid crystal (or the liquid crystal filling space) without any part of the liquid crystal rising the outer edge space.

### BRIEF DESCRIPTION OF THE DRAWINGS

Fig. 1 is an explanatory illustration of how the liquid crystal is filled into the liquid crystal cell of the present invenion;
Fig. 2 is a sectional view of one embodiment of the present invention;
Fig. 3 is an explanatory illustration of another embodiment of the liquid crystal cell of the present invention;
Fig. 4 is an explanatory illustration of how the liquid crystal is filled into the liquid crystal cell of the conventional art; and
Fig. 5 is a sectional view of the liquid crystal cell of Fig. 4 cut by the line A-A.

### DETAILED DESCRIPTION

Now, referring to the accompanying drawings, the present invention is described based on an embodiment below. However, the scope of the present invention is not limited to the embodiment.

In the drawings, numeral 1 indicates a transparent substrate, numeral 2 indicates a sealing material, numeral 3 indicates filling space for the liquid crystal, numeral 4 indicates a filling port for the liquid crystal, numeral 5 indicates an antiascent piece, numeral 6 indicates a liquid crystal boat, numeral 7 indicates an outer edge space, numeral 8 indicates liquid crystal, and numeral 9 indicates a sealing material for the filling port of the liquid crystal.

The transparent substrate 1, the sealing material 2 and the liquid crystal 8 are the same kind as are used in the conventional liquid crystal cells, and therefore, the detailed explanation thereof is omitted. Also, the liquid crystal boat 6 is the same kind as is used in producing liquid crystal cells in the conventional methods, and therefore, it is not explained in detail.

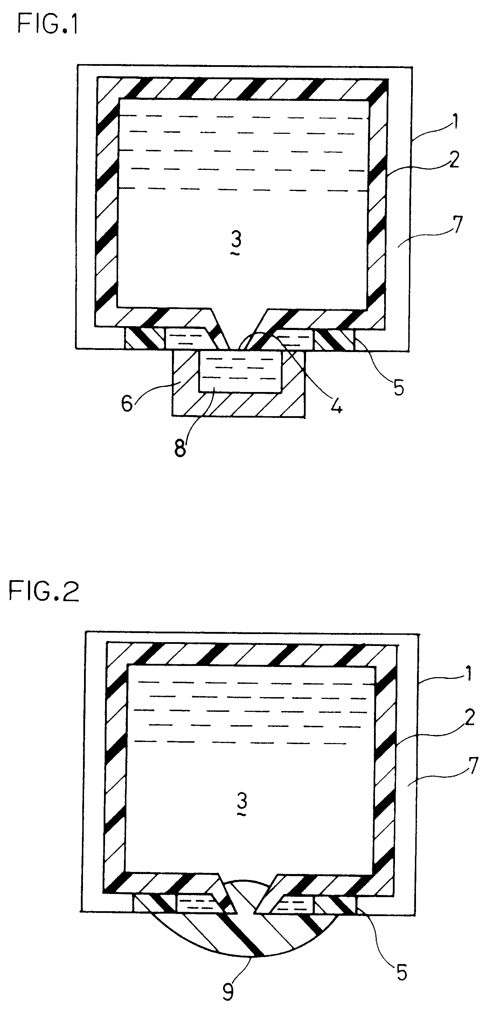

The anti-ascent piece 5 is installed in the vicinity of the outer edge of the filling port 4 for liquid crystal 8 in order to prevent the ascent of the liquid crystal 8 into the outer edge space 7 during the filling of the liquid crystal 8. For the material of the anti-ascent piece 5, any material which dries or cures in the atmosphere and does not solve each other with the liquid crystal 8 can be used. For example, epoxy resin or ultraviolet-cured cement can be used. Ultraviolet-cured cement, among them, is recommended because this same material is also used for the sealing material 9 for the filling port 4 of the liquid crystal 9 and it provides more reliable sealing as well as an easy control of the amount to be applied. The dimensions of the anti-ascent piece 5 can be chosen according to the size of the liquid crystal cell, but, with consideration of the appearance, it is desirable that the dimension of the longest side is around 0.1∼1mm. The anti-ascent piece 5 needs to have enough height to extrude out of the outer edge of the transparent substrate 1 so that it can prevent the liquid crystal 8 to ascend, and, with consideration of the appearance, it is desirable that the extruding height of the anti-ascent piece 5 is less than 0.1 mm so that there would be no problem even after it is installed in a position in which it is not covered by the sealing material 9 for the filling port 4 of the liquid crystal 8 (refer to Fig. 2).

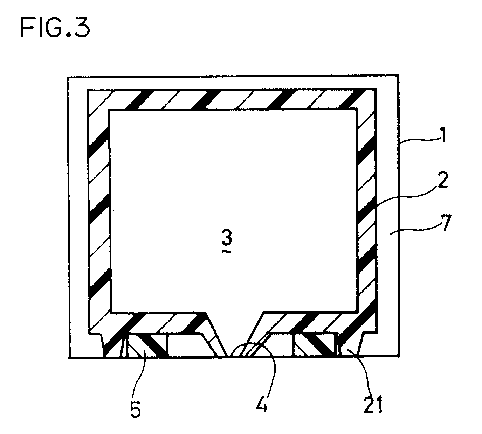

Fig. 3 shows another embodiment of the present invention in which stopper 21 is introduced on the sealing material 2. This arrangement provides easier positioning of the anti-ascent piece 5 and also prevents the anti-ascent piece 5 from moving into the outer edge space 7 before it is cured.

An embodiment of the producing method of the present invention is described below.

As with the conventional methods, sealing material 2 is to be inserted between a pair of substrates 1, 1 to form the liquid crystal cell. Then, anti-ascent piece 5 is installed in the vicinity of the filling port 4 for liquid crystal. After that, if ultraviolet-cured cement is used for the anti-ascent piece 5, fluid resin is cured. Then, as with the conventional methods, the liquid crystal cell is placed on a liquid crystal boat 6 and the liquid crystal 8 is filled through the filling port 4 for the liquid crystal 8 into the liquid crystal cell (filling space 3 for the liquid crystal 8). When liquid crystal cell is completely filled with the liquid crystal 8, the filling port 4 for the liquid crystal 8 is sealed with sealing material 9 for the filling port 4 of the liquid crystal 8, so that a liquid crystal cell device is completed.

As described above, the present invention provides the way to prevent the ascending of the liquid crystal into the outer edge space, liquid crystal does not attach on around the transparent substrate, thus the cleaning step can be omitted after the filling of the liquid crystal. Further, since the liquid crystal does not attach on the terminal, the disconnection of the terminal can be avoided, thus more reliable liquid crystal display devices can be developed.

## Claims

1. A liquid crystal cell comprising a pair of transparent substrates, sealing material inserted between the pair of subsrates, and liquid crystal filled in a space surrounded by the pair of substrates and the sealing material; characterized by an anti-ascent piece for the liquid crystal installed in the vicinity of the outer edge of a filling port for liquid crystal on said sealing material.

2. The liquid crystal cell of Claim 1, wherein said anti-ascent piece comprises ultraviolet-cured cement.

3. The liquid crystal cell of Claim 1 or Claim 2, wherein a stopper for said anti-ascent piece is formed on said sealing material.

4. A method of producing a liquid crystal cell comprising a pair of transparent substrates, sealing material inserted between the pair of substrates, and liquid crystal filled in a space surrounded by the pair of substrates and the sealing material; characterized by a step of installing an anti-ascent piece for the liquid crystal in the vicinity of the outer edge of a fill port for liquid crystal on said sealing material.

5. The method of producing a liquid crystal cell of Claim 4, wherein a step of hardening said antiascent piece after the step to install said anti-ascent piece for the liquid crystal is added.
